# FASCICULE DE BREVET EUROPEEN

(11) **EP 2 349 951 B1**
(45) Date de publication et mention de la délivrance du brevet: **23.07.2014**
(21) Numéro de dépôt: 09760235.3
(22) Date de dépôt: 28.10.2009
(51) Int. Cl.: C04B 38/04, C01B 3/00, C01B 6/24, H01M 8/06

(54) **PROCEDE DE STOCKAGE DE L'HYDROGENE DANS UN MATERIAU MONOLITHIQUE POREUX, MATERIAU COMPOSITE OBTENU ET APPLICATIONS**
VERVAHREN ZUR WASSERSTOFF SPEICHERUNG IN EINEM MONOLITHISCHEN PORÖSEN MATERIAL, DARAUS ERHALTENES KOMPOSITMATERIAL UND ANWENDUNGEN
HYDROGEN STORAGE METHOD IN A MONOLITHIC POROUS MATERIAL, OBTAINED COMPOSITE MATERIAL AND APPLICATIONS

(30) Priorité: 30.10.2008 FR 0806051; 27.07.2009 FR 0955224
(43) Date de publication de la demande: 03.08.2011
(73) Titulaire: Université Pierre et Marie Curie (Paris 6), 75005 Paris (FR)
(72) Inventeur: BACKOV, Rénal, F-33200 Bordeaux-Cauderan (FR); SANCHEZ, Clément, F-91440 Bure Sur Yvette (FR); JANOT, Raphaël, F-80260 Villers-bocage (FR); BRUN, Nicolas, F-33200 Bordeaux (FR)
(74) Mandataire: Goulard, Sophie
(86) Numéro de dépôt international: PCT/FR2009/052084
(87) Numéro de publication internationale: WO 2010/049649

(56) Documents cités:
- US-A1- 2007 292 732
- AKIRA TAGUCHI, JAN-HENRIK SMATT, MIKA LINDEN: "Carbon Monoliths Possessing a Hierarchical, Fully Interconnected Porosity" ADVANCED MATERIALS, vol. 15, no. 14, 17 juillet 2003 (2003-07-17), pages 1209-1211, XP002569342 DOI: 10.1002/adma.200300009
- J. LEE, J. KIM, T. HYEON: "Recent Progress in the Synthesis of Porous Carbon Materials" ADVANCED MATERIALS, vol. 18, no. 16, août 2006 (2006-08), pages 2073-2094, XP002569527
- NICOLAS BRUN, GILLES PÉCASTAINGS, ODILE BABOT, MARC BIROT, ALAIN SOUM, CLÉMENT SANCHEZ, MATHIEU MORCRETTE, RENAL BACKOV: "Hard-Templating Approach Using Silica Si(HIPE) Foams to Generate Micro-Macroporous Carbonaceous Monoliths" MATERIAL RESEARCH SOCIETY SYMPOSIUM PROCEEDINGS 2009, XP002569343 Extrait de l'Internet: URL:http://www.mrs.org/s_mrs/bin.asp?CID=1 6784&DID=236223&DOC=FILE.PDF [extrait le 2010-02-18]
- NICOLAS BRUN, SAVARI PRABAHARAN, MATHIEU MOCRETTE, CLEMENT SANCHEZ, GILLES PECASTAINGS, ALAIN DERRE, ALAIN SOUM, HERVE DELEUZE: "Hard Macrocellular Silica Si(HIPE) Foams Templating Micro/Macroporous Carbonaceous Monoliths: Applications as Lithium Ion Battery Negative Electrodes and Electrochemical Capacitors" ADVANCED FUNCTIONAL MATERIALS, vol. 19, no. 19, 9 février 2009 (2009-02-09), pages 3136-3145, XP009129722
- BATALLA GARCÃA BETZAIDA ET AL: "Effect of pore morphology on the electrochemical properties of electric double layer carbon cryogel supercapacitors", JOURNAL OF APPLIED PHYSICS, AMERICAN INSTITUTE OF PHYSICS. NEW YORK, US, vol. 104, no. 1, 8 July 2008 (2008-07-08), pages 14305-14305, XP012116369, ISSN: 0021-8979, DOI: 10.1063/1.2949263
- BARRETT E P ET AL: "THE DETERMINATION OF PORE VOLUME AND AREA DISTRIBUTIONS IN POROUS SUBSTANCES. I. COMPUTATIONS FROM NITROGEN ISOTHERMS", JOURNAL OF THE AMERICAN CHEMICAL SOCIETY, ACS PUBLICATIONS, US, vol. 73, 1 January 1951 (1951-01-01), pages 373-380, XP001145601, ISSN: 0002-7863, DOI: 10.1021/JA01145A126

## Description

La présente invention est relative à un procédé de stockage de l'hydrogène dans un matériau monolithique macroporeux, en particulier dans un monolithe de carbone ou céramique à structure poreuse hiérarchisée M2 (Macroporeux /Microporeux), ainsi qu'à un matériau composite de stockage de l'hydrogène et à un procédé de production d'hydrogène gazeux mettant en oeuvre un tel matériau composite.

Les matériaux se présentant sous la forme de monolithes de carbone poreux constituent des matériaux de choix pour de nombreuses applications telles que la purification de l'eau et de l'air, l'adsorption, la catalyse en phase hétérogène, la fabrication d'électrodes et le stockage de l'énergie en raison de leur grande surface spécifique, de leur grand volume de pores, de leur insensibilité aux réactions chimiques environnantes et de leurs excellentes propriétés mécaniques.

Ces matériaux comprennent une surface spécifique élevée et une structure hiérarchisée, c'est-à-dire une structure alvéolaire présentant généralement une double porosité. Ils présentent notamment une structure mésoporeuse dans laquelle le diamètre moyen des pores varie de l'ordre de 2 à 10 nm.

Ils peuvent être préparés selon deux grandes familles de procédés.

La première grande famille de procédés utilise des empreintes molles et correspond aux méthodes dites de « soft templating » en anglais, i.e. aux méthodes mettant en oeuvre des interactions organiques-organiques entre un polymère thermopolymérisable (précurseur de carbone généralement) et certains copolymères blocs de type polymères non ioniques tels que les produits vendus sous les dénominations commerciales Pluronic® P123 ou F 127 par la société BASF qui sont utilisés à titre d'agent modelant pour obtenir directement un matériau carboné poreux après carbonisation sous atmosphère inerte à 350°C et pyrolyse (Meng Y. et al., Angew. Chem. Int. Ed., 2005, 44, 2).

La deuxième grande famille de procédés utilise des empreintes rigides et correspond aux méthodes dites de « hard templating » ou « exotemplating » en anglais, i.e. aux méthodes dans lesquelles une empreinte solide mésoporeuse est imprégnée par une solution d'un précurseur du matériau final que l'on souhaite obtenir (précurseur de carbone par exemple) avant d'être carbonisée sous atmosphère non-oxydante.

L'invention qui va être décrite ci-après met en oeuvre des matériaux préparés selon un procédé appartenant à la famille des méthodes dites de « hard templating ».

De façon plus précise, les méthodes de « hard templating » mettent en oeuvre des empreintes pouvant notamment être constituées de particules de silice mésoporeuse, de membranes d'alumine, de zéolithe, etc..... Il est notamment connu, par exemple de l'article de K. P. Gierszal et al., (New Journal of Chemistry, 2008, 32, 981-993) que des monolithes de carbone mésoporeux peuvent être préparés selon une méthode utilisant des matrices de silice mésoporeuse de type MCM-48 et KIT-6 ayant une structure 3D cubique. Selon ce procédé, les matrices de silice, sous forme de poudres, sont tout d'abord imprégnées par une solution d'un précurseur de carbone qui est ensuite réticulé au sein des matrices, puis les matrices sont carbonisées. Le matériau carboné est finalement obtenu après élimination de l'empreinte de silice par un traitement à l'acide. Il se présente sous la forme d'un matériau mésoporeux dont les pores ont un diamètre moyen compris entre 3 et 5 nm environ et dont le réseau poreux a une structure qui correspond sensiblement au négatif du réseau poreux de l'empreinte utilisée. Il a par ailleurs également été décrit, notamment par Alvarez S. et al. (Advanced Engineering Materials, 2004, 6(11), 897-899), la préparation de monolithes de carbone comportant un réseau macro/mésoporeux par imprégnation d'une empreinte solide de silice méso/macroporeuse par une solution d'un précurseur de carbone tel que l'alcool furfurylique qui est ensuite polymérisé au sein de l'empreinte avant que celle-ci ne soit éliminée, par exemple par un traitement acide. Les monolithes de carbone obtenus selon la méthode décrite par Alvarez S. *et al.* comportent un réseau macroporeux qui est la réplique positive du réseau macroporeux de l'empreinte de silice utilisée, ainsi qu'un réseau mésoporeux qui correspond au négatif du réseau mésoporeux de l'empreinte de silice utilisée.

Il n'existe à ce jour aucun procédé dit de « hard-templating » permettant d'accéder à des matériaux comportant un réseau poreux hiérarchisé comprenant un réseau macroporeux qui soit la réplique exacte du réseau macroporeux de l'empreinte de silice utilisée, et un réseau microporeux, tout en étant exempt de réseau mésoporeux.

Or, il est intéressant de pouvoir disposer de matériaux de ce type, dans la mesure où la présence d'un réseau macroporeux permet d'améliorer l'imprégnation d'un fluide tel qu'un réactif au sein du matériau. Il est par ailleurs intéressant de pouvoir disposer d'un matériau présentant une certaine microporosité car cela augmente la surface spécifique du matériau et améliore les réactions de confinement en phase gazeuse (permet le stockage de l'hydrogène en phase gazeuse par exemple). Par contre, la présence d'un réseau mésoporeux dans un matériau comportant en outre un réseau macroporeux n'est pas toujours souhaitable car cela aurait pour conséquence de fragiliser la texture des parois et donc d'altérer les propriétés mécaniques du matériau dans sa globalité. En outre, il a été récemment démontré que la présence d'un réseau mésoporeux n'est pas nécessaire à l'obtention de catalyseurs hétérogènes à haute performance (Ungureanu S. et al., Chem. Mater., 2008, 20, 6464-6500).

Le stockage et la production du dihydrogène représentent par ailleurs un enjeu majeur actuel en raison de l'évolution des technologies et de l'épuisement des ressources pétrolières. L'engouement pour les technologies portables engendre une demande croissante pour des systèmes permettant le stockage et la production de dihydrogène de façon simple et industrialisable.

Durant les dix dernières années, de nombreux travaux de recherche ont été menés pour élaborer des technologies destinées à permettre le stockage du dihydrogène dans des conditions satisfaisantes tant du point de vue de la sécurité que de l'utilisation. Parmi de telles technologies, on peut notamment citer les matériaux pour les réservoirs de stockage à haute pression, les procédés de liquéfaction du dihydrogène, les matériaux d'adsorption du dihydrogène et les hydrures métalliques, qui sont adaptées à une large variété d'applications aussi bien stationnaires que portables. L'utilisation d'hydrures métalliques présente l'avantage de permettre la production d'hydrogène pur. Les hydrures métalliques, notamment les borohydrures, ont de plus une excellente capacité (massique et surtout volumique) en termes de stockage de l'hydrogène. La production de dihydrogène avec des borohydrures peut se faire par hydrolyse selon la réaction théorique suivante :
M(BH₄)ₓ + 2x H₂O → M(BO₂)ₓ + 4x H₂ (avec M = Li, Na, Mg, etc...)

Dans ce cas, le dihydrogène peut être produit à la demande, mais aucun traitement de recyclage des borates M(BO₂)ₓ en borohydrures n'est aujourd'hui viable d'un point de vue économique. L'autre moyen permettant de désorber de grandes quantités d'hydrogène consiste à désorber thermiquement les borohydrures sous l'influence d'un chauffage à température élevée, généralement à des températures supérieure ou égale à 400°C.

Il est intéressant de mettre au point des procédés de stockage de l'hydrogène permettant d'abaisser la température de désorption de l'hydrogène à partir d'hydrures métalliques, c'est-à-dire permettant d'augmenter les quantités d'hydrogène qu'il est possible de désorber à des températures plus basses que celles habituellement utilisées.

Le but de la présente invention est de fournir un procédé de stockage de l'hydrogène à température ambiante permettant d'accéder à un matériau à partir duquel il soit possible de produire du dihydrogène de façon simple et à des températures inférieures à celles qui sont habituellement nécessaires pour obtenir une désorption de l'hydrogène sous forme de dihydrogène à partir d'un borohydrure métallique.

Ce but est atteint par les procédés de stockage et de production de l'hydrogène qui font l'objet de la présente invention et qui vont être décrits ci-après. Les inventeurs ont en effet mis au point un matériau se présentant sous la forme d'un monolithe de carbone ou de céramique à structure poreuse hiérarchisée M2 (Macroporeux/Microporeux) pouvant être utilisé de façon avantageuse pour le stockage de l'hydrogène par nucléation hétérogène d'un hydrure métallique dans la microporosité dudit monolithe, ainsi que pour produire du dihydrogène par désorption de l'hydrogène contenu dans le matériau composite issu du procédé de stockage de l'hydrogène.

La présente invention a donc pour premier objet un procédé de stockage de l'hydrogène dans un matériau solide alvéolaire se présentant sous la forme d'un monolithe de carbone ou de céramique poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, ledit procédé étant caractérisé en qu'il comporte au moins les étapes suivantes :
a) une étape de dégazage dudit matériau sous vide secondaire et à une température de 150 à 400°C environ ;
b) une étape d'imprégnation, à température ambiante, dudit matériau dégazé par une solution d'un hydrure métallique en solution dans un solvant organique choisi parmi les éthers ;
c) une étape de séchage du matériau imprégné par la solution d'hydrure métallique, ledit séchage étant réalisé sous vide primaire et à température ambiante ; et éventuellement
d) la réitération, une ou plusieurs fois, des étapes b) et c) ci-dessus.

Au sens de la présente invention, on entend par monolithe, un objet solide ayant une dimension moyenne d'au moins 1 mm.

Selon une forme de réalisation préférée de ce procédé, le dégazage du matériau lors de l'étape a) est effectué à une température de 280 à 320°C environ et encore plus préférentiellement à une température de 300°C environ.

La durée de l'étape a) peut varier de 2 à 24 heures environ, elle est de préférence de 12 heures environ.

Selon une forme de réalisation préférée de l'invention, l'hydrure métallique est choisi parmi les hydrures de formule (I) suivante :

M(YH₄) (I)

dans laquelle M est un atome de lithium ou de sodium et Y est un atome d'aluminium ou de bore.

La formule (I) englobe donc le borohydrure de lithium (LiBH₄), le borohydrure de sodium (NaBH₄), l'aluminohydrure (communément appelé alanate) de lithium (LiAlH₄) et l'aluminohydrure (communément appelé alanate) de sodium (NaAlH₄).

Les solvants éthers utilisables lors de l'étape b) peuvent être choisis parmi les éthers aliphatiques et les éthers cycliques. Parmi les éthers aliphatiques, on peut notamment citer les éthers d'alkyles tels que le méthyl-tertiobutyléther (MTBE) ou le diéthyléther. Parmi les éthers cycliques, on peut notamment citer le tétrahydrofurane. Selon une forme de réalisation préférée du procédé conforme à l'invention, le solvant de la solution d'hydrure métallique est le MTBE.

La concentration de la solution d'hydrure métallique utilisée lors de l'étape b) varie de préférence de 0,05 à 5 M, et encore plus préférentiellement de 0,1 à 0,5 M environ.

Les monolithes de carbone ou de céramiques poreux utilisables selon le procédé de stockage de l'hydrogène conforme à la présente invention peuvent être préparés selon un procédé comprenant au moins les étapes suivantes :
1) une étape de préparation d'une empreinte de silice solide sous la forme d'un monolithe alvéolaire constitué d'une matrice de silice ou de silice organiquement modifiée, ledit monolithe comprenant des macropores ayant une dimension moyenne d_{A} de 1 µm à 100 µm ; des mésopores ayant une dimension moyenne d_{E} de 2 à 50 nm et des micropores ayant une dimension moyenne d_{I} de 0,7 à 1,5 nm, lesdits pores étant interconnectés ;
2) une étape d'imprégnation, sous vide, de l'empreinte de silice solide par une solution d'au moins un précurseur de carbone ou d'au moins un précurseur de céramique ;
3) une étape de polymérisation et/ou de réticulation dudit précurseur au sein de l'empreinte de silice solide ;
4) une étape de carbonisation de l'empreinte de silice solide renfermant ledit précurseur polymérisé et/ou réticulé ;
5) l'obtention dudit monolithe de carbone ou de céramique par élimination de l'empreinte de silice solide par traitement avec un acide ou une base, ledit traitement étant effectué indifféremment avant ou après ladite étape de carbonisation.

Au sens de la présente invention, on entend par réseau mésoporeux, un réseau comportant des mésopores, c'est-à-dire des pores dont la taille varie de 2 à 50 nm.

La préparation de l'empreinte de silice, lors de la première étape, est de préférence réalisée selon les procédés tels que décrits dans les demandes de brevet FR-A1-2 852 947 et FR-A1-2 912 400. Ces procédés consistent, de façon générale, à :
- préparer une émulsion en introduisant une phase huileuse dans une solution aqueuse de tensioactif,
- à ajouter une solution aqueuse d'au moins un précurseur d'oxyde de silice et/ou d'au moins un précurseur d'oxyde de silice organiquement modifié à la solution de tensioactif, avant ou après la préparation de l'émulsion,
- à laisser le mélange réactionnel au repos jusqu'à la condensation dudit précurseur, puis
- à sécher le mélange pour obtenir l'empreinte de silice solide attendue.

Dans ce cas, le ou les précurseur(s) d'oxyde de silice ou d'oxyde de silice organiquement modifié peuvent être choisis parmi les tetralcoxydes de silice de formule (II) suivante :

R'ₙ(OR)₄-ₙSi (II)

dans laquelle :
- R représente un radical alkyle ayant de 1 à 5 atomes de carbone ou un groupement de formule (III) suivante :

   -(CH₂)ₘ-R₁ (III)

   dans laquelle 0≤m≤5, et R₁ est choisi parmi un groupe thiol, un groupe pyrrole, un groupe amino qui porte éventuellement un ou plusieurs substituants alkyle, alkylamino ou aryle éventuellement substitué, un groupe alkyle (ayant de préférence de 1 à 5 atomes de carbone), ou un groupe phényle qui porte éventuellement un substituant R₂ de type alkyle, notamment un groupe méthyle,
- R' représente un radical alkyle ayant de 1 à 5 atomes de carbone ou un radical aryle qui portent éventuellement un ou plusieurs groupes fonctionnels, et
- 0≤ n < m ; m étant la valence de l'atome de silicium.

Dans un mode de réalisation, le précurseur de formule (II) comporte un seul type de groupement de formule (III). Dans un autre mode de réalisation, le précurseur de formule (II) comporte au moins deux types différents de groupements de formule (III).

En particulier, le groupement organique de formule (III) peut être :
- un groupement 3-mercaptopropyle ;
- un groupement 3-aminopropyle ;
- un groupement N-(3-propyl) pyrrole ;
- un groupement N-(2-aminoéthyl)-3-aminopropyle ;
- un groupement 3-(2,4 dinitrophénylamino) propyle ;
- un groupement phényle ou benzyle ; ou
- un groupement méthyle.

Le ou les précurseur(s) de formule (II) sont de préférence choisis parmi le tetraméthoxysilane, le tetraéthoxyorthosilane (TEOS), le (3-mercaptopropyl)triméthoxysilane, le (3-aminopropyl)triéthoxysilane, le N-(3-triméthoxy-silylpropyl)pyrrole, le 3-(2,4 dinitrophénylamino)propyltriéthoxysilane, le N-(2-aminoéthyl)-3-aminopropyltriméthoxysilane, le phényltriéthoxysilane et le méthyltriéthoxysilane.

L'utilisation d'un précurseur de formule (II) comportant au moins un groupement de formule (III), permet d'obtenir une empreinte de silice dans laquelle le mouillage par la solution de précurseurs de carbone ou de céramique est amélioré. Cela permet également d'optimiser l'imprégnation de la porosité avec des monomères polymérisables ou des macromonomères qui donneront naissance au carbone et à des céramiques diverses.

La concentration en précurseur(s) d'oxyde de silice et/ou en précurseurs d'oxyde de silice organiquement modifié au sein de la solution aqueuse est, de préférence, supérieure à 10 % en masse par rapport à la masse de la phase aqueuse. Cette concentration varie plus préférentiellement de 17 à 35 % en masse par rapport à la masse de la phase aqueuse.

La phase huileuse est de préférence constituée par un ou plusieurs composés choisis parmi les alcanes linéaires ou ramifiés ayant au moins 12 atomes de carbone. A titre d'exemple, on peut citer le dodécane et l'hexadécane. La phase huileuse peut en outre être constituée par une huile de silicone de faible viscosité, c'est-à-dire inférieure à 400 centipoise.

La quantité de phase huileuse présente au sein de l'émulsion peut être ajustée en fonction du diamètre des macropores que l'on souhaite obtenir pour l'empreinte de silice, étant entendu que plus la fraction volumique huile/eau sera élevée, plus le diamètre des gouttelettes d'huile au sein de l'émulsion sera faible et plus le diamètre des macropores sera faible également.

De manière générale, la phase huileuse représente de 60 à 90 % en volume par rapport au volume total de l'émulsion. Cette quantité d'huile permet d'obtenir une empreinte de silice dans laquelle le diamètre moyen des macropores varie de 1 à 100 µm environ.

Le composé tensioactif peut être un tensioactif cationique choisi notamment parmi le bromure de tetradécyltriméthylammonium (TTAB), le bromure de dodécyltriméthylammonium ou le bromure de cétyl-triméthylammonium. Lorsque le composé tensioactif est cationique, le milieu réactionnel est porté à un pH inférieur à 3, de préférence inférieur à 1. Le bromure de tetradécyltriméthylammonium est particulièrement préféré.

Le composé tensioactif peut en outre être un tensioactif anionique choisi parmi le dodécylsulfate de sodium, le dodécylsulfonate de sodium et le dioctylsulfosuccinate de sodium (AOT). Lorsque le composé tensioactif est anionique, le milieu réactionnel est porté à un pH supérieur à 10.

Le composé tensioactif peut enfin être un tensioactif non ionique choisi parmi les tensioactifs à tête éthoxylée, et les nonylphénols. Parmi de tels tensioactifs, on peut en particulier citer les copolymères blocs d'éthylèneglycol et de propylèneglycol vendus par exemple sous les dénominations commerciales Pluronic® P123 et Pluronic® F127 par la société BASF. Lorsque le composé tensioactif est non ionique, le milieu réactionnel est porté à un pH supérieur à 10 ou inférieur à 3, de préférence inférieur à 1 et contient en outre, de préférence, du fluorure de sodium afin d'améliorer la condensation des précurseurs de l'oxyde de silice.

La quantité totale de tensioactif présente au sein de l'émulsion peut également être ajustée en fonction du diamètre des macropores que l'on souhaite obtenir dans l'empreinte de silice. Cette quantité est également variable en fonction la nature du tensioactif utilisé.

De manière générale, la quantité de tensioactif varie de 1 à 10 % en masse, de préférence de 3 à 6 % en masse, par rapport à la masse totale de l'émulsion.

L'étape de condensation du ou des précurseur(s) d'oxyde de silice et/ou du ou des précurseur(s) d'oxyde de silice organiquement modifié est effectuée avantageusement à une température proche de la température ambiante. La durée de cette étape peut varier de quelques heures (2 à 3 heures) à quelques semaines (2 à 3 semaines) en fonction du pH du milieu réactionnel.

L'empreinte de silice obtenue à la fin de la première étape est de préférence lavée à l'aide d'un solvant organique (tel que par exemple le tetrahydrofurane, l'acétone et leurs mélanges), puis séchée (par exemple à l'air en étuve ou par lyophilisation) avant de subir l'étape d'imprégnation par la solution de précurseur de carbone ou de précurseur de céramique.

Le ou les précurseur(s) de carbone sont de préférence choisis parmi les résines phénoliques, les résorcinols, le styrène, le divinylbenzène, les polysaccharides tels que par exemple le saccharose et ses dérivés, l'amidon de pomme de terre, la lignine, les mélanges lignine-cellulose et les brais de pétrole.

Le ou les précurseurs de céramiques sont de préférence choisis parmi les polymères pré-céramiques conduisant aux oxycarbonitrures, carbonitrures, nitrures ou boronitrures éventuellement métalliques parmi lesquels on peut en particulier citer les polysilanes, les polyalkylsilanes et leurs dérivés azotés, les polyaminoborazines et leurs dérivés, les polyborosilanes, les polycarbazides et leurs dérivés, etc...

Les précurseurs de carbone et de céramique peuvent se présenter sous la forme de monomères, d'oligomères, de macromonomères préformés ou de polymères que l'on polymérise et/ou réticule lors de l'étape 3). Lorsqu'un brai de pétrole est utilisé à titre de précurseur de carbone, l'étape 3) n'est pas nécessairement réalisée.

Le précurseur de la solution d'imprégnation est de préférence un précurseur de carbone, et encore plus préférentiellement une résine phénolique, en particulier une résine formophénolique.

Le solvant de la solution de précurseur de carbone ou de précurseur de céramique est de préférence un solvant organique choisi parmi les alcools inférieurs tels que l'éthanol, le tetrahydrofurane (THF), le toluène, et leurs mélanges. Lorsque le précurseur de carbone est choisi parmi les résines phénoliques, le solvant peut également être choisi parmi l'eau et les mélanges d'eau avec au moins un solvant organique choisi parmi les solvants cités ci-dessus, en présence d'une base.

La quantité de précurseur de carbone ou de précurseur de céramique dans la solution utilisée pour l'étape d'imprégnation peut être ajustée en fonction du diamètre des macropores que l'on souhaite obtenir dans les monolithes de carbone ou de céramique à l'issue du procédé, étant entendu que plus cette quantité est faible, plus le diamètre des macropores est grand et plus les jonctions internes (parois des macropores) sont fines. De manière générale, la quantité de précurseur de carbone ou de précurseur de céramique au sein de la solution d'imprégnation varie de 5 à 90 % en masse, et encore plus préférentiellement de 20 à 70 % en masse, par rapport à la masse totale de ladite solution.

L'étape 3) de polymérisation et/ou de réticulation du ou des précurseur(s) de carbone ou de céramique peut être réalisée par toutes les méthodes connues de l'homme du métier.

Lorsque le précurseur est un précurseur de carbone, tel que par exemple une résine phénolique, on procède à une réticulation thermique.

Lorsque le précurseur est un précurseur de carbone tel que par exemple le styrène ou le divinylbenzène, on procède à une réticulation induite par un agent réticulant choisi notamment parmi l'azo(bis)isobutyronitrile (AIBN), le peroxodisulfate de potassium et le peroxodisulfate de sodium.

Lorsque le précurseur est un précurseur de céramique, on procède à une polymérisation suivie d'une réticulation, ces deux opérations pouvant être induites par voie thermique ou photochimique.

L'étape de carbonisation de l'empreinte de silice imprégnée de précurseur de carbone ou de céramique polymérisé et/ou réticulé est généralement effectuée en atmosphère réductrice, à une température variant de 500 à 1200°C environ pendant une durée de 3 à 12 heures environ.

Comme indiqué précédemment, l'étape d'élimination de l'empreinte de silice peut être réalisée indifféremment avant ou après l'étape de carbonisation, l'ordre de réalisation de ces deux étapes n'ayant en effet aucune incidence sur la structure du réseau poreux du monolithe résultant.

Cette étape d'élimination de l'empreinte de silice est de préférence réalisée par immersion de l'empreinte de silice imprégnée de précurseur polymérisé et/ou réticulé, ou du monolithe de carbone ou de céramique résultant de la carbonisation, dans une solution d'un acide, telle que par exemple une solution d'acide fluorhydrique ou dans une solution basique ayant un pH supérieur à 9, telle que par exemple dans une solution de soude ou de potasse. La durée de ce traitement n'est pas critique à partir du moment où il conduit à l'élimination totale de l'empreinte de silice. Cette durée varie généralement de 12 à 24 heures.

Un autre objet de l'invention est le matériau composite issu du procédé de stockage de l'hydrogène conforme à l'invention et tel que décrit précédemment.

Ce matériau composite se présente sous la forme d'un monolithe de carbone ou de céramique poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, ledit matériau composite étant caractérisé en ce que les micropores renferment de l'hydrogène sous forme d'un hydrure métallique cristallin, semi-cristallin ou amorphe.

Dans ce matériau composite, les parois des macropores ont généralement une épaisseur de 0,5 à 40 µm, et de préférence de 2 à 25 µm.

Selon l'invention, les micropores sont présents dans l'épaisseur des parois des macropores, les rendant alors microporeuses.

La surface spécifique du matériau composite conforme à l'invention est généralement de 50 à 900 m²/g environ, préférentiellement de 100 à 400 m²/g environ.

Selon une forme de réalisation préférée de l'invention, le volume des micropores est supérieur ou égal à 0,30 cm³.g⁻¹ de monolithe composite et l'hydrure métallique est dans ce cas sous forme amorphe.

La teneur en hydrogène présent sous forme d'hydrure métallique dans le matériau composite conforme à l'invention variera en fonction du volume microporeux et de la surface spécifique du monolithe utilisé lors de l'étape b) d'imprégnation et de la concentration en hydrure métallique de la solution utilisée pour l'imprégnation dudit monolithe. De manière générale, la teneur en hydrogène varie de 0,004 à 0,08 mole d'hydrogène environ par gramme de carbone monolithique. Cette quantité molaire correspond à une capacité massique de 0,6 à 8,1 % environ (masse d'hydrogène stockée par rapport à la masse totale du matériau composite).

L'invention a pour objet l'utilisation d'un matériau composite tel que défini précédemment pour la production de dihydrogène, notamment pour fournir du dihydrogène dans une pile à combustible fonctionnant au dihydrogène.

Enfin, l'invention a pour dernier objet le procédé de production de dihydrogène mettant en oeuvre un matériau composite conforme à la présente invention. Il est caractérisé en ce que l'on soumet le matériau composite tel que défini ci-dessus à une étape de chauffage à une température d'au moins 100°C. De préférence, l'étape de chauffage est effectuée à une température de 250 à 400°C.

A une température d'au moins 100°C, on observe le dégagement de dihydrogène suite à la désorption de l'hydrogène de l'hydrure métallique contenu dans les micropores du matériau composite conforme à l'invention.

La présente invention est illustrée par les exemples de réalisation suivants, auxquels elle n'est cependant pas limitée.

### EXEMPLES

Les matières premières utilisées dans les exemples qui suivent sont listées ci-après :
- Bromure de tetradécyltriméthylammonium à 98 % (TTAB) : société Alfa Aesar ;
- Tetraéthoxyorthosilane à 98 % (TEOS) : société Aldrich ;
- Acétone et Dodécane à 99 % : société Rectapur ;
- Tetrahydrofurane (THF) ; acide fluorhydrique à 48 % et acide chlorhydrique à 37 % : société Analar Normapur ;
- Résine formophénolique vendue sous forme d'une solution hydroalcoolique de prépolymères, sous la dénomination Ablaphene ® RS 101 par la société Rhodia ;
- Poudre de LiBH₄ commerciale vendue par la société Acros Organics ;
- Méthyl-tertio-butyléther (MTBE) pur à 99,8 % vendu par la société Sigma-Aldrich.

Ces matières premières ont été utilisées telles que reçues des fabricants, sans purification supplémentaire.

Les différents monolithes obtenus dans les exemples ont été caractérisés sur différentes échelles de tailles.

La mésoporosité a été caractérisée de manière qualitative par une technique de microscopie électronique à transmission (MET) à l'aide d'un microscope Jeol 2000 FX ayant une tension d'accélération de 200 kV. Les échantillons ont été préparés en déposant des squelettes de silice en poudre sur une grille en cuivre revêtue d'une membrane Formvar&commat en carbone.

La macroporosité a été caractérisée de manière qualitative par une technique de microscopie électronique à balayage (MEB) à l'aide d'un microscope à balayage Hitachi TM-1000 qui fonctionne à 15 kV. Les échantillons ont été revêtus d'or ou de palladium dans un évaporateur sous vide avant leur caractérisation.

Les mesures de surface spécifique ont été faites par des techniques d'adsorption-désorption d'azote à l'aide d'un appareil commercialisé sous la dénomination Micromeritics ASAP 2010 ; le dépouillement étant fait par les méthodes de calcul B.E.T ou B.J.H..

La macroporosité a été quantifiée par des mesures d'intrusion de mercure, à l'aide d'un appareil commercialisé sous la dénomination Micromeritics Autopore IV, pour atteindre les caractéristiques des cellules minérales macroscopiques composant le squelette inorganique.

Les échantillons ont été soumis à une analyse par diffraction des rayons X (XRD) à l'aide d'un diffractomètre D8 Advance vendu par la société Bruker (anode Cu K_{α} radiation, λ = 1,54056 Ǻ) équipé d'un détecteur PSD. En raison de la grande réactivité de LiBH₄ à l'air et à l'humidité, un porte échantillon hermétique équipé d'une fenêtre en béryllium a été utilisé. Ce dispositif est responsable de la présence de réflections correspondant à Be métallique sur les diagrammes de diffraction des rayons X.

Des analyses calorimétriques ont été réalisées sous flux d'argon (100 cm³.min⁻¹) à l'aide d'un calorimètre différentiel à balayage commercialisé sous la référence DSC 204 par la société Netzsch, en utilisant des creusets en acier inoxydable scellés par un couvercle, ce dernier étant perforé juste avant l'analyse de façon à permettre à l'hydrogène de s'échapper sous l'influence du chauffage.

### Exemple 1

### Préparation de monolithes de carbone macro- et microporeux

Dans cet exemple on illustre la préparation de différents monolithes de carbone présentant une double porosité macro/micro à partir d'un monolithe de silice micro/méso/macroporeux.

### 1) Première étape : Synthèse d'un monolithe de silice micro/méso/macroporeux (MSi).

5 g de TEOS ont été ajoutés à 16 g d'une solution aqueuse de TTAB à 35 % précédemment acidifiée par 7 g d'HCl. On a laissé l'hydrolyse se dérouler jusqu'à obtention d'un milieu hydrophile monophasique (phase aqueuse de l'émulsion). On a ensuite ajouté à cette phase aqueuse, 35 g de dodécane (phase huileuse de l'émulsion) au goutte à goutte et sous agitation. On a ensuite laissé l'émulsion se condenser sous forme d'un monolithe de silice pendant une semaine à température ambiante. Le monolithe de silice ainsi synthétisé a ensuite été lavé par un mélange THF/acétone (50/50 : v/v) pour en extraire la phase huileuse. Le monolithe de silice a alors été mis à sécher pendant une semaine à température ambiante puis il a été soumis à traitement thermique à 650°C pendant 6 heures en appliquant une vitesse de montée en température de 2°C/min., avec un plateau à 200°C pendant 2 heures. On a obtenu un monolithe de silice que l'on a désigné MSi.

### 2) Deuxième étape : Imprégnation du monolithe de silice par la résine phénolique

Le monolithe de silice MSi obtenu ci-dessus a été découpé en 5 morceaux identiques de 0,5 g chacun à l'aide d'une scie à main.

Par ailleurs, on a préparé les deux solutions de résine phénolique Ablaphene® RS 110 suivantes :
- Solution S25 : Ablaphene ® RS 110 à 25 % en poids dans le THF,
- Solution S80 : Ablaphene ® RS 110 à 80 % en poids dans le THF,

Un morceau de 0,5 g de monolithe de silice a ensuite été immergé dans chacune des solutions S25 et S80 dans un bécher. Les béchers ont été placés sous vide jusqu'à disparition de l'effervescence afin de s'assurer d'une bonne imprégnation des matrices de silice par les solutions de résine phénolique. Après 24 heures d'agitation à température ambiante, chacune des solutions a été filtrée.

Les monolithes de silice ainsi imprégnés des solutions S25 et S80, respectivement MSiS25 et MSiS80, ont alors été lavés rapidement au THF puis séchés dans un four à une température de 80°C pendant 24 heures afin de faciliter l'évaporation du solvant et initier thermiquement la réticulation des monomères de la résine phénolique. Chacun des monolithes MSiS25 et MSiS80 a ensuite subi un deuxième traitement thermique dans une étuve à air chaud, à 155°C pendant 5 heures, avec une vitesse d'élévation de la température de 2°C/min., en effectuant un premier plateau à 80°C pendant 12 heures puis un second plateau à 110°C pendant 3 heures. On a ensuite laissé les monolithes revenir à température ambiante par simple arrêt de l'étuve. On a ainsi obtenu des monolithes de silice imprégnés par une résine phénolique réticulée (monolithes hybrides de type MSiSréti). Ces monolithes sont respectivement désignés MSiS25réti et MSiS80réti. Le monolithe MSiS25réti a été préparé en double.

### 3) Troisième étape : Synthèse des monolithes de carbone

Deux voies de synthèse ont été mises en oeuvre.

Selon la première voie de synthèse, un des monolithes MSiS25réti tels qu'obtenus ci-dessus à l'issue de la deuxième étape a été immergé dans trois bains successifs d'acide fluorhydrique à 10 %, puis lavé de façon abondante avec de l'eau désionisée. Ce traitement à l'acide fluorhydrique a entraîné l'élimination de l'empreinte de silice. Le monolithe résultant de ce traitement a ensuite été séché dans une étuve à air chaud pendant une nuit à 80°C. Après séchage, le monolithe a été soumis à une pyrolyse à une température de 900°C pendant 1 heure sous flux d'azote en respectant une vitesse de montée en température de 5°C/min. Le monolithe de carbone graphitisé ainsi obtenu a été désigné MS25carb.

La seconde voie de synthèse a été appliquée à l'autre monolithe MSiS25réti, ainsi qu'au monolithe MSiS80réti. Selon cette seconde voie, l'ordre de réalisation du traitement à l'acide fluorhydrique et de la pyrolyse a simplement été inversé, chacune de ces deux étapes étant néanmoins réalisée de façon identique au mode opératoire utilisé pour aboutir aux monolithes MScarb. Les monolithes de carbone graphitisés ainsi obtenus ont été respectivement dénommés MS25HF et MS80HF.

### 4) Caractérisations

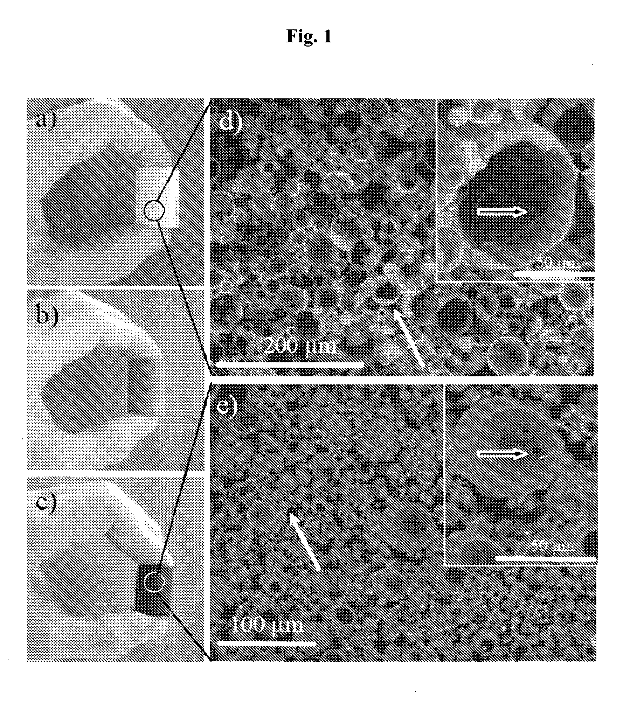

La figure 1 annexée montre des vues macroscopiques des monolithes obtenus à l'issue de chacune des trois étapes du procédé : la figure 1a) correspond à un monolithe de type MSi ; la figure 1b) correspond à un monolithe de type MSiSréti et la figure 1c) correspond au un monolithe de carbone de type MS80HF.

On constate que la forme générale du monolithe de silice utilisé à titre d'empreinte est reproduite à l'identique par le monolithe de carbone via le monolithe hybride de type MSiSréti. On observe également une perte de volume d'environ 45 % entre le monolithe de silice et le monolithe de carbone correspondant ; cette perte de volume est due à une sorte de tassement du matériau engendrée par l'élimination de l'empreinte de silice lors de la pyrolyse.

La figure 1 annexée montre également une vue microscopique en MEB du réseau poreaux macroscopique d'un monolithe de type MSi (fig. 1d) et du monolithe de carbone de type MS80HF. Sur ces figures, les flèches blanches indiquent les jonctions externes des pores et les flèches noires sur fond blanc indiquent les jonctions internes des pores.

On observe que la structure du réseau macroporeux du monolithe de silice est conservée dans le monolithe de carbone correspondant indiquant que celui-ci est la réplique sensiblement exacte de l'empreinte de silice utilisée.

Les résultats des mesures d'intrusion au mercure effectuées sur chacun des monolithes de carbone synthétisés dans cet exemple sont regroupés dans le tableau 1 ci-après.

**Tableau 1**

| **Monolithes** | **MS25HF** | **MS25carb** | **MS80HF** |
|---|---|---|---|
| Surface spécifique (m².g⁻¹) | 802 | 650 | 459 |
| Volume des micropores (cm³.g⁻¹) | 0,34 | 0,25 | 0,18 |
| Surface des micropores (m².g⁻¹) | 781 | 658 | 456 |

Ces résultats montrent que les monolithes de carbone ainsi obtenus sont essentiellement microporeux, avec une surface de micropores allant de 456 m²/g⁻¹ (MS80HF) à 781 m²/g⁻¹ (MS25HF).

### Exemple 2

### Stockage et relargage de l'hydrogène dans les monolithes de carbone

Les monolithes de carbone MS25HF, MS25carb et MS80HF préparés ci-dessus à l'exemple 1 ont été utilisés pour stocker de l'hydrogène, par nucléation hétérogène de LiBH₄ au sein des micropores. Le relargage de l'hydrogène à partir des monolithes de carbone a également été étudié.

### 1) Stockage de l'hydrogène par nucléation hétérogène de LiBH₄

Toutes les expériences de nucléation hétérogène du LiBH₄ dans les monolithes de carbone MS25HF, MS25carb et MS80HF ont été réalisées en boite à gants sous atmosphère d'argon purifié. On a d'abord préparé une solution à 0,1 M de LiBH₄ par dissolution de 217 mg de poudre de LiBH₄ dans 100 ml de MTBE à température ambiante et sous agitation. Les monolithes de carbone ont été dégazés à 300°C sous vide pendant 12 heures avant d'être imprégnés par la solution de LiBH₄. L'imprégnation a été réalisée en plaçant 100 mg de chacun des monolithes de carbone dans la solution à 0,1 M de LiBH₄. Après imprégnation, les monolithes de carbone ont été extraits de la solution de LiBH₄ par filtration et séchés sous vide primaire à température ambiante. Trois cycles d'imprégnation/séchage ont ainsi été réalisés afin d'augmenter la quantité de LiBH₄ contenu dans les monolithes.

On a ainsi obtenu des monolithes de carbone chargés en LiBH₄ solide (monolithes composites) que l'on a respectivement dénommé MS25HF/Li, MS25carb/Li et MS80HF/Li.

La quantité de LiBH₄ chargée dans les monolithes a été déterminée par mesure de la teneur en Li par spectroscopie d'absorption atomique (SAA) sur un spectromètre vendu sous la dénomination commerciale AAnalyst 300 par la société PerkinElmer, après dissolution des monolithes chargés en LiBH₄ dans une solution d'acide chlorhydrique 1,0 M. Typiquement, 50 mg de monolithe composite sont introduits dans une fiole contenant 250 cm³ de la solution de HCl 0,1 M, puis la fiole est placée dans une cuve à ultrasons pour une durée de 30 minutes. La solution obtenue est dosée par spectrométrie d'absorption atomique. Des solutions standards à 1, 2 et 3 mg.L⁻¹ de Li ont été préalablement utilisées pour étalonner le spectromètre.

### 2) Relargage de l'hydrogène

La décomposition thermique de LiBH₄ inclus dans les monolithes composites a été étudiée par calorimétrie différentielle à balayage (DSC) sous un flux d'argon (100 ml/min). Pour ce faire, environ 8 mg de monolithe composite sont placés dans un creuset en acier équipé d'un couvercle permettant le dégagement de gaz lors du chauffage. Le couvercle est percé au dernier moment juste avant la manipulation. Une vitesse de chauffe de 2°C/min a été utilisée pour chaque échantillon.

L'évolution du dégagement de dihydrogène en fonction de la température a été étudiée par une expérience de thermo-désorption couplée à un spectromètre de masse quadripolaire vendu sous la référence QXK300 par la société VG Scientific Ltd. Pour ce faire, environ 5 mg de monolithe composite ont été placés dans un tube en acier inoxydable de 6 mm de diamètre. Ce tube a été connecté à un vide primaire (10⁻² mbar). Les courbes de TPD ont été obtenues après chauffage des échantillons selon une rampe de montée en température de 10°C/min jusqu'à une température de 600°C. Les gaz désorbés ont été collectés par le spectromètre de masse. Les températures de dégagement de dihydrogène ont été évaluées à partir des variations d'intensité du pic m/z = 2.

La quantification du dégagement de dihydrogène a été réalisée par mesures volumétriques selon la méthode de Sievert (variation de pression dans des volumes calibrés) en utilisant la loi des gaz parfaits. Plus spécifiquement, après dégazage de l'échantillon de monolithe composite sous vide primaire à température ambiante, la quantité d'hydrogène désorbé a été calculée tous les 50°C pour des températures comprises entre 100 et 500°C. Le volume calibré dans lequel le dihydrogène a été collecté a été régulièrement évacué afin que la pression soit toujours inférieure à un bar. Pour chaque température, la quantité d'hydrogène désorbé a été calculée après une durée totale de désorption de 2 heures.

Toutes les teneurs en hydrogène données dans cet exemple sont exprimées en pourcentage massique rapportée à la masse totale de l'échantillon (LiBH₄ + monolithe de carbone).

### 3) Résultats

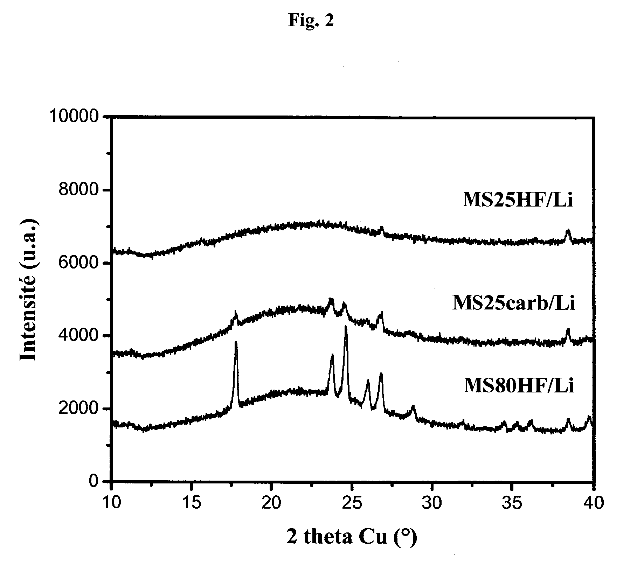

La figure 2 annexée représente les diagrammes de diffraction des rayons X des monolithes composites MS25HF/Li, MS25carb/Li et MS80HF/Li contenant chacun environ 30 % en masse de LiBH₄. Sur cette figure, l'intensité (en unités arbitraire) est fonction de l'angle de diffraction en degrés.

Ces diagrammes démontrent que l'augmentation de la microporosité au sein du monolithe de carbone hôte favorise la nucléation hétérogène du LiBH₄ sous forme amorphe. En effet, pour le monolithe MS80HF/Li dont le volume des micropores est de 0,18 cm3.g⁻¹, on observe des pics de diffraction bien définis correspondant à la maille orthorhombique basse température de LiBH₄ (groupe d'espace Pnma, a = 7,182 Ǻ, b = 4,439 Ǻ, c = 6,804 Ǻ). Lorsque le volume des micropores augmente (cas du monolithe MS25carb/Li dont le volume des micropores est de 0,25 cm³.g⁻¹), on obtient un diagramme sur lequel les pics de diffractions sont plus larges, ce qui signifie que LiBH₄ présent dans le monolithe MS25carb/Li est sous une forme moins cristalline que dans le monolithe composite MS80HF/Li. Finalement, le diagramme obtenu avec le monolithe composite MS25HF/Li dans lequel le volume des micropores est de 0,34 cm³.g⁻¹, c'est-à-dire environ 2 fois plus important que dans le monolithe composite MS80HF/Li, ne présente aucun pic de diffraction correspondant aux cristaux de LiBH₄, ce qui signifie que le LiBH₄ solide contenu dans le monolithe composite MS25HF/Li est sous une forme totalement amorphe.

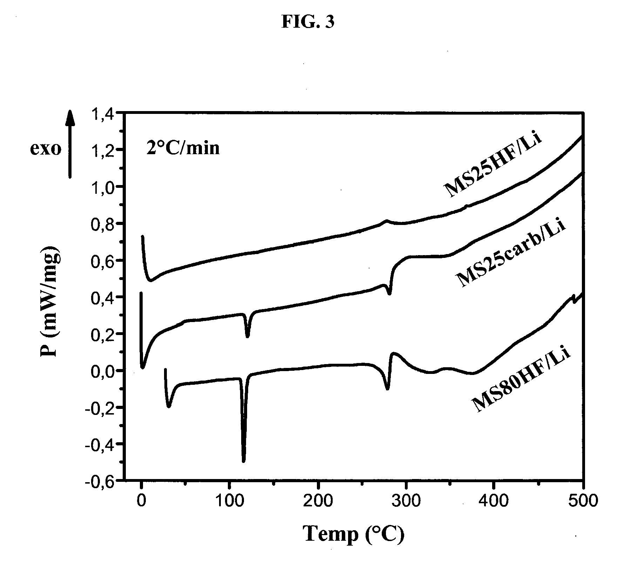

La perte de cristallinité de LiBH₄ dans le monolithe composite MS25HF/Li est confirmée par DSC. Les résultats correspondants sont présentés sur la figure 3 annexée sur laquelle le flux de chaleur (en mW/mg) est fonction de la température (en °C). Avec les monolithes composites MS80HF/Li et MS25carb/Li, on observe la présence d'un pic endothemiique à 116°C indiquant que LiBH₄ subit une transition de phase pour passer de la maille orthorhombique basse température (Pnma) à une phase haute température (P6₃mc) (Soulié, J.-P ; et al., J. All. Comp., 2002, 346, 200). Le second pic endothermique situé à 286°C correspond à la fusion de LiBH₄. Selon la littérature, il est connu que la désorption de l'hydrogène à partir de LiBH₄ sous forme de poudre, c'est-à-dire non contenu dans un monolithe de carbone tel qu'utilisé selon la présente invention, se déroule en 2 étapes à une température supérieure au point de fusion (*via* la formation d'un produit de décomposition intermédiaire : Li₂B₁₂H₁₂ ; Orimo, S. et al., Appl. Phys. Let., 2006, 89, 219201), pour aboutir finalement à la formation d'un mélange de LiH et de bore. Ce type de décomposition du LiBH₄ est observé dans le monolithe composite MS80HF, la désorption de l'hydrogène donnant lieu à deux larges pics endothermiques entre 300 et 400°C. On observe que le pic correspondant à la désorption de l'hydrogène à partir du monolithe composite MS25carb/Li est modifié, le changement étant encore plus important à partir du monolithe composite MS25HF/Li. En effet, malgré le fait que la teneur en LiBH₄ contenu soit la même pour chacun des monolithes composites (30 % massique), le pic de désorption obtenu à partir du monolithe composite MS25HF/Li est très différent puisqu'on note l'absence des pics endothermiques caractéristiques de la transition de phase et de la fusion de LiBH₄. Ces résultats démontrent que LiBH₄ ne cristallise pas sous forme orthorhombique dans le monolithe MS25HF et confirment les résultats de diffraction des rayons X. On observe par ailleurs un petit pic exothermique à 280°C pour le monolithe composite MS25HF/Li, correspondant probablement à la désorption de l'hydrogène. Ces résultats démontrent qu'il est possible de modifier la désorption de l'hydrogène à partir des monolithes composites de l'invention en fonction du volume des micropores des monolithes dans lesquels est réalisée la nucléation hétérogène.

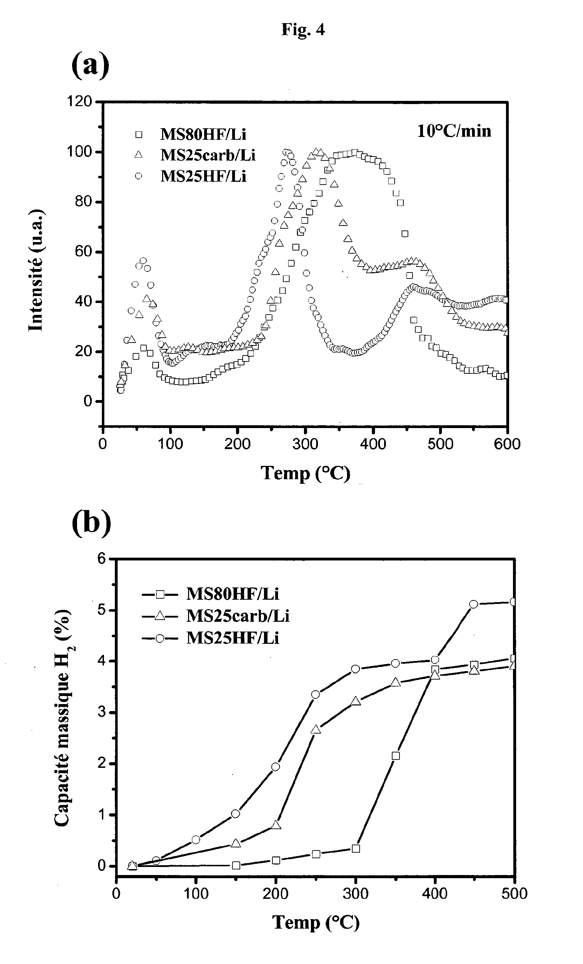

Les propriétés de désorption de l'hydrogène des différents monolithes composites sont présentées sur la figure 4 annexée. La figure 4a représente les courbes d'émission de dihydrogène mesurée par thermodésorption couplée au spectromètre de masse sur les monolithes composites MS25HF/Li, MS25carb/Li et MS80HF/Li. Sur cette figure l'intensité du pic m/z = 2 est fonction de la température en °C, la courbe avec les ronds vides correspond à l'émission de dihydrogène mesurée à partir du monolithe composite MS25HF/Li, celle avec les triangles vides au monolithe composite MS25carb/Li et celle avec les carrés vides au monolithe composite MS80HF/Li. La figure 4b représente également les courbes d'émission de dihydrogène obtenues par mesures volumétriques selon la méthode de Sievert pour chacun des monolithes composites. Sur cette figure 4b, la quantité d'hydrogène désorbé (en % massique) est fonction de la température en °C ; la courbe avec les ronds vides correspond à l'émission de dihydrogène mesurée à partir du monolithe composite MS25HF/Li, celle avec les triangles vides au monolithe composite MS25carb/Li et celle avec les carrés vides au monolithe composite MS80HF/Li.

Lors des mesures de désorption effectuées par TPD couplé au spectromètre de masse, il n'a été observé aucun autre dégagement de gaz que le dihydrogène. Cette observation est intéressante dans la mesure où il a été rapporté dans la littérature que la désorption de l'hydrogène à partir de LiBH₄ peut être contaminée par du diborane B₂H₆ (Kostka, J. et al., J. Phys. Chem. C, 2007, 111, 14026). On observe sur la figure 4a une évolution de la désorption d'hydrogène en fonction du volume des micropores : en effet, plus le volume microporeux augmente et plus la température de désorption de l'hydrogène est basse. Le pic principal de désorption de l'hydrogène pour le monolithe composite MS80HF/Li (volume microporeux : 0,18 cm³.g⁻¹) est centré à 370°C alors qu'avec le monolithe composite MS25HF/Li (volume microporeux : 0,34 cm³.g⁻¹) la désorption se produit en une seule étape à une température d'environ 270°C. Avec le monolithe composite MS25HF/Li, la température à laquelle l'hydrogène commence à désorber est d'environ 200°C, ce qui correspond à une température à laquelle on n'observe habituellement aucune désorption de l'hydrogène à partir de LiBH₄ libre, c'est-à-dire sous forme de poudre non contenue dans un support solide. Ces résultats démontrent que la température de désorption de l'hydrogène peut être ajustée en choisissant le volume microporeux des monolithes de carbone utilisés lors de la nucléation hétérogène du LiBH₄. Ces résultats sont confirmés par les mesures volumétriques effectuées selon la méthode de Sievert et reportées par la figure 4b annexée où l'on constate également que la quantité d'hydrogène désorbé à basses températures est d'autant plus importante que le volume microporeux des monolithes de carbone utilisés selon l'invention augmente.

## Revendications

1. Procédé de stockage de l'hydrogène dans un matériau solide alvéolaire se présentant sous la forme d'un monolithe de carbone ou de céramique poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, ledit procédé étant caractérisé en qu'il comporte au moins les étapes suivantes :
a) une étape de dégazage dudit matériau sous vide secondaire et à une température de 150 à 400°C ;
b) une étape d'imprégnation, à température ambiante, dudit matériau dégazé par une solution d'un hydrure métallique en solution dans un solvant organique choisi parmi les éthers ;
c) une étape de séchage du matériau imprégné par la solution d'hydrure métallique, ledit séchage étant réalisé sous vide primaire et à température ambiante ; et éventuellement
d) la réitération, une ou plusieurs fois, des étapes b) et c) ci-dessus.

2. Procédé selon la revendication 1, **caractérisé en ce que** le dégazage du matériau lors de l'étape a) est effectué à une température de 280 à 320°C.

3. Procédé selon la revendication 1 ou 2, **caractérisé en ce que** la durée de l'étape a) varie de 2 à 24 heures.

4. Procédé selon l'une quelconque des revendications précédentes, **caractérisé en ce que** l'hydrure métallique est choisi parmi les hydrures de formule (I) suivante :
M(YH₄) (I)
dans laquelle M est un atome de lithium ou de sodium et Y est un atome d'aluminium ou de bore.

5. Procédé selon l'une quelconque des revendications précédentes, **caractérisé en ce que** les solvants éthers utilisables lors de l'étape b) sont choisis parmi les éthers aliphatiques et les éthers cycliques.

6. Procédé selon l'une quelconque des revendications précédentes, **caractérisé en ce que** le solvant de la solution d'hydrure métallique est le méthyl-tertiobutyléther.

7. Procédé selon l'une quelconque des revendications précédentes, **caractérisé en ce que** la concentration de la solution d'hydrure métallique utilisée lors de l'étape b) varie de 0,05 à 5 M.

8. Matériau composite se présentant sous la forme d'un monolithe de carbone ou de céramique poreux comportant un réseau poreux hiérarchisé comprenant des macropores ayant une dimension moyenne d_{A} de 1 µm à 100 µm environ, de préférence de 4 à 70 µm environ, et des micropores ayant une dimension moyenne d_{I} de 0,7 à 1,5 nm, lesdits macropores et micropores étant interconnectés, ledit matériau étant exempt de réseau mésoporeux, ledit matériau composite étant **caractérisé en ce que** les micropores renferment de l'hydrogène sous forme d'un hydrure métallique cristallin, semi cristallin ou amorphe.

9. Matériau composite selon la revendication 8, **caractérisé en ce que** sa surface spécifique est de 50 à 900 m²/g.

10. Matériau composite selon la revendication 8 ou 9, **caractérisé en ce que** le volume des micropores est supérieur ou égal à 0,30 cm³.g⁻¹ de monolithe composite et **en ce que** l'hydrure métallique est sous forme amorphe.

11. Matériau composite selon l'une quelconque des revendications 8 à 10, **caractérisé en ce que** la teneur en hydrogène varie de 0,004 à 0,08 mole d'hydrogène par gramme de carbone monolithique.

12. Utilisation d'un matériau composite tel que défini à l'une quelconque des revendications 8 à 11, pour la production de dihydrogène.

13. Utilisation selon la revendication 12, pour fournir du dihydrogène dans une pile à combustible fonctionnant au dihydrogène.

14. Procédé de production de dihydrogène, **caractérisé en ce que** l'on soumet un matériau composite tel que défini à l'une quelconque des revendications 8 à 11, à une étape de chauffage à une température d'au moins 100°C.

15. Procédé selon la revendication 14, **caractérisé en ce que** l'étape de chauffage est effectuée à une température de 250 à 400°C.

## Patentansprüche

1. Verfahren für die Speicherung von Wasserstoff in einem wabenförmigen festen Material in Form eines porösen Kohlenstoff- oder Keramikmonolithen, der ein hierarchisiertes poröses Netzwerk aufweist, das Makroporen mit einer durchschnittlichen Größe d_{A} von zirka 1 µm bis 100 µm, vorzugsweise von zirka 4 bis 70 µm, und Mikroporen mit einer durchschnittlichen Größe d_{I} von 0,7 bis 1,5 nm aufweist, wobei die Makroporen und Mikroporen miteinander verbunden sind, wobei das Material kein mesoporöses Netzwerk hat, wobei das Verfahren **dadurch gekennzeichnet ist, dass** es mindestens die folgenden Schritte aufweist:
a) einen Entgasungsschritt des Materials im sekundären Vakuum und bei einer Temperatur von 150 bis 400 °C,
b) einen Imprägnierschritt des entgasten Materials bei Raumtemperatur durch eine Lösung eines Metallhydrids, das in einem aus den Ethern ausgewählten organischen Lösungsmittel gelöst ist,
c) einen Trocknungsschritt des mit der Metallhydridlösung imprägnierten Materials, wobei die Trocknung im primären Vakuum und bei Raumtemperatur durchgeführt wird, und eventuell
d) die ein- oder mehrmalige Wiederholung der obigen Schritte b) und c).

2. Verfahren nach Anspruch 1, **dadurch gekennzeichnet, dass** die Entgasung des Materials bei Schritt a) bei einer Temperatur von 280 bis 320 °C durchgeführt wird.

3. Verfahren nach Anspruch 1 oder 2, **dadurch gekennzeichnet, dass** die Dauer von Schritt a) von 2 bis 24 Stunden schwankt.

4. Verfahren nach einem der vorangehenden Ansprüche, **dadurch gekennzeichnet, dass** das Metallhydrid aus den Hydriden der folgenden Formel (I) ausgewählt ist:
M(YH₄) (I),
wobei M ein Lithium- oder Natriumatom ist und Y ein Aluminium- oder Boratom ist.

5. Verfahren nach einem der vorangehenden Ansprüche, **dadurch gekennzeichnet, dass** die bei Schritt b) verwendbaren Etherlösungsmittel aus den aliphatischen Ethern und den zyklischen Ethern ausgewählt sind.

6. Verfahren nach einem der vorangehenden Ansprüche, **dadurch gekennzeichnet, dass** das Lösungsmittel der Metallhydridlösung der Methyltertiärbutylether ist.

7. Verfahren nach einem der vorangehenden Ansprüche, **dadurch gekennzeichnet, dass** die Konzentration der bei Schritt b) verwendeten Metallhydridlösung von 0,05 bis 5 M schwankt.

8. Verbundmaterial in Form eines porösen Kohlenstoff- oder Keramikmonolithen, der ein hierarchisiertes poröses Netzwerk aufweist, das Makroporen mit einer durchschnittlichen Größe d_{A} von zirka 1 µm bis 100 µm, vorzugsweise von zirka 4 bis 70 µm, und Mikroporen mit einer durchschnittlichen Größe d_{I} von 0,7 bis 1,5 nm aufweist, wobei die Makroporen und Mikroporen miteinander verbunden sind, wobei das Material kein mesoporöses Netzwerk hat, wobei das Verbundmaterial **dadurch gekennzeichnet ist, dass** die Mikroporen den Wasserstoff in Form eines kristallinen, halbkristallinen oder amorphen Metallhydrids einschließen.

9. Verbundmaterial nach Anspruch 8, **dadurch gekennzeichnet, dass** seine spezifische Fläche 50 bis 900 m²/g beträgt.

10. Verbundmaterial nach Anspruch 8 oder 9, **dadurch gekennzeichnet, dass** das Volumen der Mikroporen größer oder gleich 0,30 cm³.g⁻¹ Verbundmonolith ist und dass das Metallhydrid in amorpher Form ist.

11. Verbundmaterial nach einem der Ansprüche 8 bis 10, **dadurch gekennzeichnet, dass** der Wasserstoffgehalt von 0,004 bis 0,08 Mol Wasserstoff je Gramm monolithischer Kohlenstoff schwankt.

12. Verwendung eines Verbundmaterials nach einem der Ansprüche 8 bis 11 für die Herstellung von Diwasserstoff.

13. Verwendung nach Anspruch 12 zur Bereitstellung von Diwasserstoff in einer Brennstoffzelle, die mit Diwasserstoff arbeitet.

14. Verfahren für die Herstellung von Diwasserstoff, **dadurch gekennzeichnet, dass** ein Verbundmaterial nach einem der Ansprüche 8 bis 11 einem Erhitzungsschritt auf eine Temperatur von mindestens 100 °C ausgesetzt wird.

15. Verfahren nach Anspruch 14, **dadurch gekennzeichnet, dass** der Erhitzungsschritt bei einer Temperatur von 250 bis 400 °C durchgeführt wird.

## Claims

1. A method of storing hydrogen in a cellular solid material in the form of a porous carbon or ceramic monolith comprising a hierarchized porous network comprising macropores of mean size d_{A} of 1 µm to 100 µm approximately, preferably 4 to 70 µm approximately, and micropores having a mean size d_{I} of 0.7 to 1.5 nm, said macropores and micropores being interconnected and said material containing no mesoporous network, said method being **characterized in that** it comprises at least the following steps:
a) a step of degassing said material under a high vacuum and at a temperature of 150 to 400°C;
b) a step of impregnating, at room temperature, said degassed material with a solution of a metal hydride dissolved in an organic solvent chosen from ethers;
c) a step of drying the material impregnated with the metal hydride solution, said drying being carried out in a low vacuum and at room temperature; and, optionally
d) the repetition, one or more times, of steps b) and c) above.

2. The method as claimed in claim 1, **characterized in that** the degassing of the material in step a) is carried out at a temperature of 280 to 320°C.

3. The method as claimed in claim 1 or 2, **characterized in that** the duration of step a) varies from 2 to 24 hours.

4. The method as claimed in any one of the preceding claims, **characterized in that** the metal hydride is chosen from hydrides of the following formula (I):
M(YH₄) (I)
in which M is a lithium or sodium atom and Y is an aluminum or boron atom.

5. The method as claimed in any one of the preceding claims, **characterized in that** the ether solvents that can be used in step b) are chosen from aliphatic ethers and cyclic ethers.

6. The method as claimed in any one of the preceding claims, **characterized in that** the solvent for the metal hydride solution is methyl tert-butyl ether.

7. The method as claimed in any one of the preceding claims, **characterized in that** the concentration of the metal hydride solution used in step b) varies from 0.05 to 5M.

8. A composite in the form of a porous carbon or ceramic monolith comprising a hierarchized porous network comprising macropores of mean size d_{A} of 1 µm to 100 µm approximately, preferably 4 to 70 µm approximately, and micropores having a mean size d_{I} of 0.7 to 1.5 nm, said macropores and micropores being interconnected and said material containing no mesoporous network, said composite being **characterized in that** the micropores contain hydrogen in the form of a crystalline, semicrystalline or amorphous metal hydride.

9. The composite as claimed in claim 8, **characterized in that** its specific surface area is from 50 to 900 m²/g.

10. The composite as claimed in claim 8 or 9, **characterized in that** the volume of the micropores is greater than or equal to 0.30 cm³/g of composite monolith and **in that** the metal hydride is in amorphous form.

11. The composite as claimed in any one of claims 8 to 10, **characterized in that** the hydrogen content varies from 0.004 to 0.08 mol of hydrogen per gram of monolithic carbon.

12. The use of a composite as defined in any one of claims 8 to 11 for the production of dihydrogen.

13. The use as claimed in claim 12 for delivering dihydrogen into a fuel cell operating with dihydrogen.

14. A dihydrogen production process, **characterized in that** a composite as defined in any one of claims 8 to 11 is subjected to a heating step at a temperature of at least 100°C.

15. The process as claimed in claim 14, **characterized in that** the heating step is carried out at a temperature of 250 to 400°C.
